# EUROPEAN PATENT APPLICATION

(11) **EP 1 804 418 A1**
(43) Date of publication of application: **04.07.2007**
(21) Application number: 05801937.3
(22) Date of filing: 20.10.2005
(51) Int. Cl.: H04L 9/32, H04M 11/00, G06F 15/00

(54) **A DYNAMIC PASSWORD AUTHENTICATION SYSTEM AND THE METHOD THEREOF**

(30) Priority: 22.10.2004 CN 200410083893
(71) Applicant: Beijing Watch Data System Co. Ltd., Beijing 100015 (CN)
(72) Inventor: GAO, Xiang, YanDong Business Park No.2, Wanhong, District Beijing 100015 (CN); HU, Peng, YanDong Business Park, Chaoyang District Beijing 100015 (CN)
(74) Representative: Armstrong, Rosemary
(86) International application number: PCT/CN2005/001720
(87) International publication number: WO 2006/042469

(57) **Abstract**

The present invention provides a dynamic password authentication system and the method thereof, which uses a dynamic password telecommunication card embedded with a security algorithm in the SIM card of the user's mobile telephone to generate a momentarily changed password. The technology improves the security of identity authentication effectively and avoids the trouble for the user to remember the password and change the password frequently. The technology is suitable to the systems that require a higher security of the identify authentication, such as the bank, the securities, the police and the electronic government affair and the like, thereby to improve the security for the system administrator and the user to login the system.

## Description

### Field of the Invention

The present invention relates to the field of information security. In particular, the present invention relates to a dynamic password authentication system and the method thereof.

### Description of the Related Art

With the rapid development of the computer and internet technologies, many domestic large enterprises and government offices are trying to use the internet to establish a fast and efficient network channel between the public and themselves in order to provide various network services to the people. Due to the characteristics of the information service system based on internet, the network security becomes more and more important, for example, in network bank, network tax reporting and network enterprise annual inspecting. In these systems, there are large amount of information which is required to be kept secret. Thus, persons who access to these systems should be subject to a strict identity authentication.

People already had a common understanding that identity authentication technology should be adopted in network information service systems. In addition, various technologies (for example, IC card technology and biology identify technology such as fingerprint authentication) were applied in some systems to improve the reliability of the identity authentication. However, because of the restriction of some realistic conditions such as finance and technology maturity, currently a majority of systems still use the simple method based on user name + static password to perform the identity authentication.

Because the authentication mode based on the static password has the shortcomings of "unchangeable" and "easy to be decrypted", the method using the static password as a unique valid identity identification of a user in the network information service system can not meet the requirement on security. In addition, a security problem of counterfeit users' login is becoming increasingly normal. There are the following kinds of attacking to the authentication system based on the static password:
network data stream sniffer, authentication information record/replay, dictionary attack, brute force, prying, social engineering and dumpster diving.

In recently years, a dynamic password technology has been proposed to remove a good many vulnerabilities in the static password. In this technology, a continuously changing password is used to verify a user's identity. The dynamic password token is kept by the user himself, and it is difficult for the other users to obtain dynamic password information in the token. In addition, an advantage of the dynamic password is that it is unpredictable, is safety and convenient in use, and has a determined power and responsibility. Therefore, the technology can surely resolve the problem of identity authentication and authorization for remote and single time access required in network information service system.

However, since the password token and backstage management system in this kind of dynamic password system is expensive and the system has a fixed renewal period, it costs a lot for the user of the system. In the next place, dynamic password token used by the user has a single function, and the distribution, maintenance, replacement and recovery of the token incurs an increase in expense and management cost to the user of the dynamic password system. For the above reasons, it is difficult for this kind of dynamic password system to be widely used in large numbers of general users.

### Summary of the Invention

One aspect of the present invention is to provide a dynamic password authentication method for a user by means of a mobile telephone which is commonly used in ordinary life, in which the user uses a dynamic password telecommunication card embedded with a security algorithm in the mobile telephone to generate a momentarily changed, unpredictable and one-off password.

The other aspect of the present invention is to provide a method for transmitting a dynamic password function of a mobile telephone and a security authentication server by means of a mobile communication network. In this method, a shared secret of the mobile telephone and the security authentication server can be built in an OTA (Over-the-Air) mode, which can not be achieved by conventional dynamic password token scheme.

A further aspect of the present invention is to provide a dynamic password authentication system which can provide a dynamic password authentication in security.

In order to achieve the above aspects, the present invention has the following technical scheme:
A dynamic password authentication method, wherein it comprises the steps of:
   a mobile terminal performing an encrypting operation using a dynamic password algorithm generating key and an initialization parameter stored in a telecommunication card to obtain an encryption result:
   sending the encryption result and a user identity identification code to a security authentication server;
   the security authentication server seeking out the dynamic password generating algorithm key in a database based on the user identity identification code and performing a decrypting operation to the encryption result to obtain a decrypted parameter.
   comparing the initialization parameter with the decrypted parameter, the mobile terminal passing the authentication if the initialization parameter is consistent with the decrypted parameter, and the authentication being denied if not.

The initialization parameter is time information of the mobile terminal.

In the method, if the time information is used as the initialization parameter, a communication delay and a clock error value are added into the decrypted parameter.

The initialization parameter is counting information of the mobile terminal.

In the method, if the counting information is used as the initialization parameter, an error value caused by the previous denying of the authentication is added.

The dynamic password generating algorithm key, a user menu or applications which are stored in the mobile terminal and the security authentication server are updated or changed in an Over-the-Air (OTA) mode.

The OTA mode comprises the steps of:
a service provider updating new services used with a dynamic password in a database of a download server;
the mobile terminal implementing a momentary query to a dynamic menu download server by a mobile telephone short message, and sending a dynamic menu downloading request to the download server if new services used with the dynamic password are found, the request of the user being upload by network to the short message service center and transmitted to the download server by a gateway;
the download server packaging the dynamic menu requested by the user into a short message with a specified format, and downloading the dynamic password menu required by the user into the dynamic password telecommunication card of the user through a network link in a data short message mode.

The telecommunication card is a SIM card or a UIM card.

A dynamic password authentication system, comprising:
an authentication server; and a mobile terminal connected to the authentication server via wireless communication,
the mobile terminal is provided with a dynamic password telecommunication card to generate a dynamic password,
the authentication server is stored therein with a dynamic password key corresponding to the dynamic password telecommunication card of the mobile terminal to verify the dynamic password submitted by the mobile terminal.

The system further comprises a short message service center wirelessly connected to the mobile terminal, and the short message service center provides update service for the user of the mobile terminal or the authentication server.

A dynamic password is submitted to perform the identity authentication when a user of the present invention login the network information service system. Thus, problems concerning the user identity authentication in the remote/network environment are effectively resolved. In addition, the present invention can provide a convenient, wieldy, reliable and cost effective information security product for users.

The password download mode according to the present invention can realize a safety and frequent changing of the shared secret information between the mobile telephone and the security authentication server. It also can perform the updating and amending of the user menu and applications in the dynamic password telecommunication card to provide a convenient, rapid and low-cost download service for shared secret information of the users.

### Brief Description of the Drawings

Fig.1 is a schematic view showing a dynamic password authentication system based on a mobile telephone according to the present invention;
Fig.2 is a schematic view showing a specific structure of a dynamic password telecommunication card used with the present invention;
Fig.3 is a flow chart of the short message service center providing services in an OTA mode according to the present invention;
Fig.4 is a schematic view showing a structure of a security server according to the present invention;
Fig.5 is a schematic diagram showing a dynamic password authentication system based on a mobile telephone according to the present invention;
Fig.6 is a flow chart of the mobile telephone generating a dynamic password according to the present invention;
Fig.7 is a flow chart of the dynamic password authentication system authenticating a dynamic password according to the present invention; and
Fig.8 is a flow chart of a password distribution of the dynamic password telecommunication card according to the present invention.

### DETAILED DESCRIPTION OF THE PREFERRED EMBODIMENTS

Embodiments of the present invention will be described in detail with reference to the drawings.

### I. Description of the structure of the dynamic password authentication system based on the mobile telephone

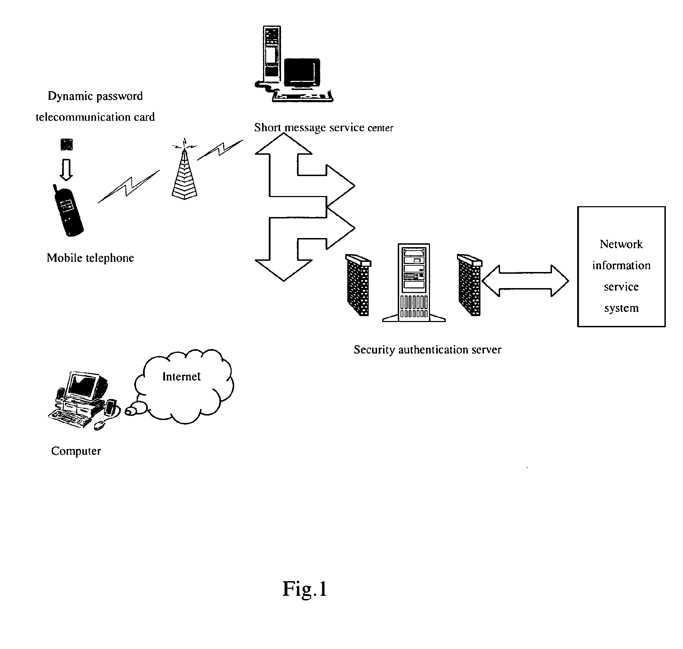

Fig.1 is a schematic view showing a dynamic password authentication system based on a mobile telephone according to the present invention. As shown in Fig.1, the dynamic password authentication system mainly comprises a mobile phone of the subscriber end, a dynamic password telecommunication card, a short message service center and a security authentication server.

### 1. The mobile phone

At present, most of the mobile phones sold in the market can support the STK Class 2. A user with a mobile phone supporting the STK Class 2 can have services of the dynamic password authentication system based on the mobile telephone without special settings.

### 2. Dynamic password telecommunication card

The mobile phone of the user uses a SIM card or a UIM card which is loaded with a dynamic password security algorithm and can support a STK function (hereinafter referred as a "dynamic password telecommunication card"). The following description is taking the SIM card as an example. SIM (Subscriber Identity Model) card is also called a smart card or a user identity identification card, which is necessary for a GSM digital mobile phone to be used. The dynamic password telecommunication card according to the present invention is loaded with a dynamic password security algorithm based on functions provided by the SIM card, and at the same time is stored therein with a user dynamic password key. In one instance, a calculating function of a microprocessor chip in the SIM card is used to generate a one-off "dynamic password" with the time as a parameter, that is, according to the local time. In the other instance, a counter is used as a parameter to continuously and sequentially generate a one-off "dynamic password" which can not be predicted and tracked. Thus, the user password can not be stolen. In addition, the problem of frequently changing in the conventional password can also be resolved.

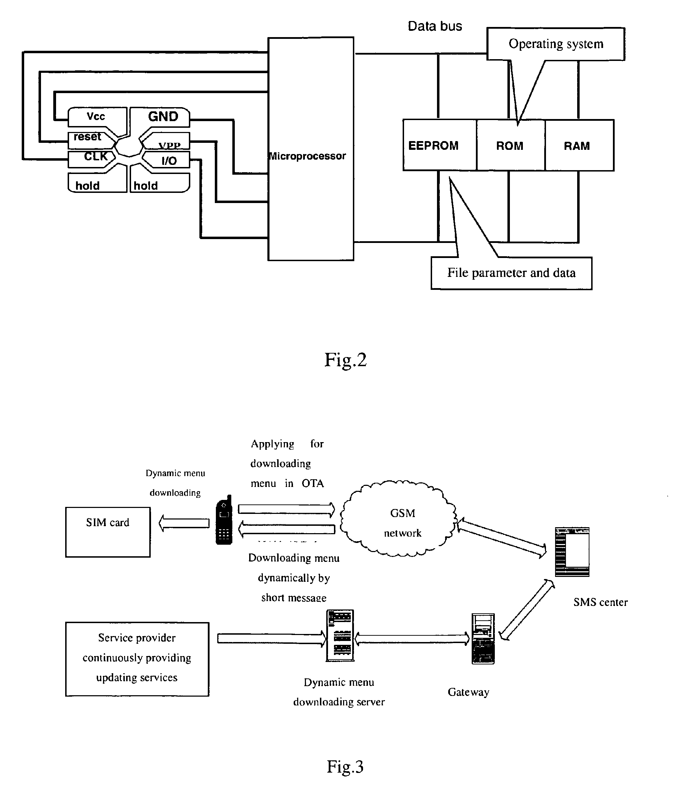

Fig.2 is a schematic view showing a specific structure of a dynamic password telecommunication card used with the present invention.

The dynamic password telecommunication card according to the present invention comprises a microcircuit chip, in which not only information concerning the user of the digital mobile phone is stored, but also a dynamic password security algorithm and dynamic password key are loaded into its operating system. The microcircuit chip can perform an authenticating of a conventional GSM network to a subscriber identity and guarantee a normal communication of the subscriber strictly in conformity with the GSM international standard and criterion. At the same time, when the user calls a dynamic password function through the menu in the mobile telephone, if the PIN password verification is passed, the dynamic password telecommunication card uses the dynamic password key in the card to call a dynamic password security algorithm loaded in the operating system to calculate a dynamic password taking the time information in the mobile phone or accumulated counter information in the card as a parameter, then accomplishes the dynamic password operating process in the card.

Since the SIM card is used in the GSM system, the card can be separated from the mobile phone. One card can uniquely identify one subscriber. Therefore, at the time of loading a user dynamic password key, the dynamic password telecommunication card can use the unique identifier of the SIM card to calculate the dynamic password key of each user with a root key, by which an effect of "one card with one password" can be achieved. Because the dynamic password telecommunication card of the user can be used in any one of GSM mobile telephones and different mobile telephones generate different dynamic passwords, the dynamic password authentication based on mobile phone is surely convenient and safety.

### 3. Short message service center

A short message service center provides services in an OTA mode to users of the dynamic password identity authentication system based on the mobile telephone. OTA technology (Over-the-Air technology) can have a remote management to the data and applications of the SIM card through the air interface of mobile communication (GSM or CDMA). It is the best scheme for the value-added service updating of the current 2G mobile communication network. STK (SIM card application tool kit) is a developing tool proposed in GSM11.14. The STK applies a mechanism based on a short message, which realizes a shift of a part of data service from a PC to a mobile phone and meets the requirement of the user of obtaining information in a moving state. At present, all the value added services provided by the China Mobile Communication Corporation are developed based on the STK. The "Monternet Program", which serves as a carrier of mobile internet services, can provide timely, abundant, manifold and individuated information services. In addition, because the operation of the STK services is simple and convenient, a great development has been taken. Current dynamic STK service over-the-air technology adopts advanced OTA (air interface mode) technology, by which applications in the SIM card are managed to realize a real individuated service.

### OTA has the following technical advantages:

1) The dynamic STK menu download technology takes a data short message as a carrier of information downloading. The data short message is a special short message which is not shown in a mobile telephone screen and is directly transmitted to the SIM card as data. The data is directly stored and processed by the SIM card after it is received by the card, and the transmitting and receiving of this kind of short message are only supported by the STK card.
2) No additional special devices are needed to be provided at mobile communication network end for using the over-the-air technology of the dynamic STK service. That is, it does not need a reconstruction of existing networks, a frequent card replacement of the users and a large investment of value added service providers, which provides a "both-win" mode for the users, operators and value added service providers.
3) The over-the-air technology of the dynamic STK service based on the short message can make the users download whatever they want according to their preference at any time, in any space, and it really realizes the concept of individuated service. The technology resolves the conflict between a limited card capacity and unlimited needs for value added services, and breaks through the restriction of time and space.
4) The "over-the-air technology of the dynamic STK service" can be applied in many circumstances using mobile electronic business, including domestic and foreign enterprises, banks, securities, information centers, hotels and supermarkets. The service provider can change or add contents and coding of the menu as the case may be for the choices of the users. The users can also download or update application menu timely according to their needs.
5) The "over-the-air technology of the dynamic STK service" can also be used to browse a dynamic menu download server of the service provider. The service provider can provide a multilevel menu on the server for the user to download, and at last one of the services can be selected by the user. The user can also select and change different service providers according to a server list provided by the mobile communication operator.
   According to the present invention, an OTA mode is used to transmit data in the network by wireless communication technology. Only with clicks of the user's finger, a mobile user can transmit a dynamic password menu updating requirement towards the air menu download server by a mobile telephone. Then the server will update and amend user menu and applications in the dynamic password card in a wireless mode, by which a convenient, fast and cost effective menu download service is provided to the user.
   Generally, if the user buys a dynamic password telecommunication card, all applications including the dynamic password applications are fixed. If the service provider wants to change applications in the card or provide update service to the system, in one possible way, the user should go to a designated business hall with the dynamic password telecommunication card to handle this matter. However, it is difficult for the telecommunication operator to uniformly change applications in the user card because all the cards are required to be recalled for such changing. If the OTA mode is used, the changing becomes easy. The user can apply to the telecommunication company for the contents which needs to be changed everywhere at any time. The telecommunication company can immediately send new applications to the user card after it receives the application. The telecommunication company can also change applications of all or a part of the users once by a batch sending mode.
   Fig.3 is a flow chart of the short message service center providing services in an OTA mode according to the present invention. As shown in Fig.3, the operating flow of the short message service center providing services in an OTA mode is as follows:
   First step: a service provider develops new services used with dynamic password application and updates timely the database of the dynamic download server.
   Second step: a mobile user using the over-the-air technology of the dynamic STK service can implement a momentary query in the dynamic menu download server by a mobile telephone short message, and send timely a dynamic menu downloading request to the download server if a new service used with the dynamic password application is found, the request of the user is upload by GSM network to the SMS center (short message service center) and transmitted to the download server by a gateway;
   Third step: the download server packages the dynamic menu requested by the user into a short message with a specified format, and downloads the dynamic password menu required by the user into the dynamic password telecommunication card of the user through the primary network link in a data short message mode, which completes downloading process of the dynamic password menu and applications.

### 4. Security authentication server

The security authentication server is the most important part of the whole system and is connected to an application system server via a local area network. It controls access to the network of all the remote users, provides all-round authentication, authorization and audit services. The security authentication server has a perfect data security self protection function in which all user data is encrypted and stored in the database, and also has safety and complete database management and backup functions. The security authentication server has a powerful graphics management interface and can provide all system management functions such as user management, operator management and audit management. The security authentication server comprises the following six parts: a system operation module, a user management module, a system communication module, a system management module, a dynamic password test module and a database.

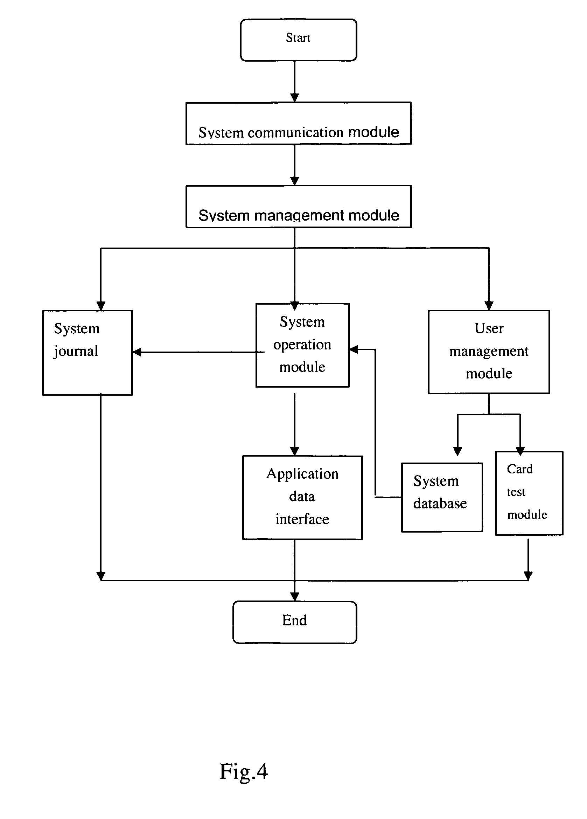

Fig.4 is a schematic view showing a structure of a security server according to the present invention. As shown in Fig.4, the security server comprises the following parts:
1) System operation module
   The system operation module uses the same dynamic password security algorithm as that in the dynamic password telecommunication card to realize verification function of the dynamic password and carefully records the operation journal. The system operation module can carry out the interconnection with the application interface.
2) User management module
   The user management module has a powerful graphics management interface and can perform the delivery, delete, freezing and unfreezing of the dynamic password telecommunication card. The user management module can also carry out a query on basic information of a user of the dynamic password telecommunication card.
3) System communication module
   The system communication module is connected with the system initialization module and processes the related data communications.
4) System management module
   The system management module performs functions of managing each module of the system and implementing a query of the authentication journal. The system management module has a simple graphics interface to realize an all-around system management function.
5) Dynamic password telecommunication card test module
   The dynamic password test module is used to test in this mobile telephone whether the dynamic password telecommunication card operates properly.
6) Database
   The database stores system information such as user information, card information, administrator information, system settings, operating journal, in which important information (for example, user dynamic password key) is stored in an encryption mode.

### II. Description of operation principle of the dynamic password authentication system based on the mobile telephone

The dynamic password telecommunication card according to the present invention is stored therein with a dynamic password security algorithm key and a dynamic password telecommunication card ID number. The dynamic password security algorithm is the 3DES algorithm which is a popular symmetrical key algorithm used worldwide. The user can have a normal mobile communication when the dynamic telecommunication card is inserted into the card slot of the mobile telephone. When the user wants to login the network information service system, a dynamic password function written in the STK menu of the card or an OTA mode can be used to download the menu into the mobile phone, after which the dynamic password function in the menu is called. At this time, the mobile telephone will prompt the user to input PIN password. If the input password is correct, the dynamic password telecommunication card will generate a dynamic password and display it in the screen of the mobile telephone.

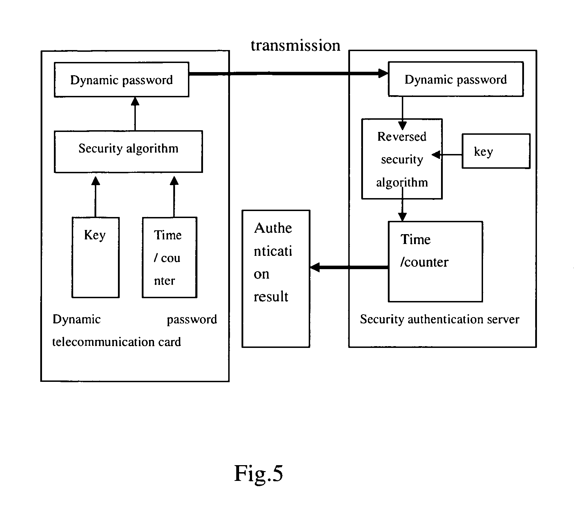

Fig.5 is a schematic diagram showing a dynamic password authentication system based on a mobile telephone according to the present invention.

The dynamic password telecommunication card provides the dynamic password in a time synchronism operation mode of a counter synchronism operation mode.
1) Time synchronism operation mode
   The dynamic password telecommunication card obtains time information from the mobile phone and uses a security algorithm key preset in the card to perform an encryption operation taking the time information as a parameter. Then an encryption result of an 8 or 16 bit character string is produced and displayed on the LCD of the mobile telephone.
   All the information inputted by the user, including the user identity identification code and the dynamic password information, are sent to the security authentication server. The security authentication server picks up the security algorithm key of the user and the initialization time parameter of the card from the user database according to the user identity identification code, and then decrypts the received dynamic password using the security algorithm key. The decrypted time parameter is compared with the system time and a judging result of accept or deny is given considering the communication delay and the clock error.
2) Counter synchronism operation mode
   An 8 bit accumulator counter is made in the dynamic password telecommunication card. Taking the value of the counter as a parameter, the dynamic password telecommunication card uses a security algorithm key preset in the card to perform an encryption operation. Then an encryption result of an 8 bit character string is produced and displayed on the LCD of the mobile telephone. The counter will automatically plus one for each computation of the dynamic password.
   All the information inputted by the user, including the user identity identification code and the dynamic password information, are sent to the security authentication server. The security authentication server picks up the security algorithm key of the user and the parameter of the previous login times from the user database according to the user identity identification code, and then decrypts the received dynamic password using the security algorithm key. The decrypted counter value is compared with the parameter of the previous login times, and a judging result of accept or deny is given considering the error caused by the denying of login.

### III. Description of operation flow of the dynamic password authentication system based on the mobile telephone

A dynamic password telecommunication card is delivered to every user who wants to login the network information service system. The user can insert the dynamic password telecommunication card into the card slot of the mobile telephone to replace the telecommunication card, then a normal mobile communication can be carried out. Each time when the user login the network system via a computer to have the service, the menu can be downloaded into the mobile telephone through the STK or UTK menu written in the card or in the OTA mode, and then the dynamic password function in the menu is called. At this time, the mobile telephone prompts the user to input the PIN password of the mobile telephone. After the PIN password is verified, a dynamic password generated by the dynamic password telecommunication card is displayed on the display of the mobile telephone. The user only needs to take an 8 or 16 bit number displayed in the mobile telephone as a password of the current login and at the same time input the identity identification code of the user in the network information service system into the system through a computer keyboard, then the user can login the system.

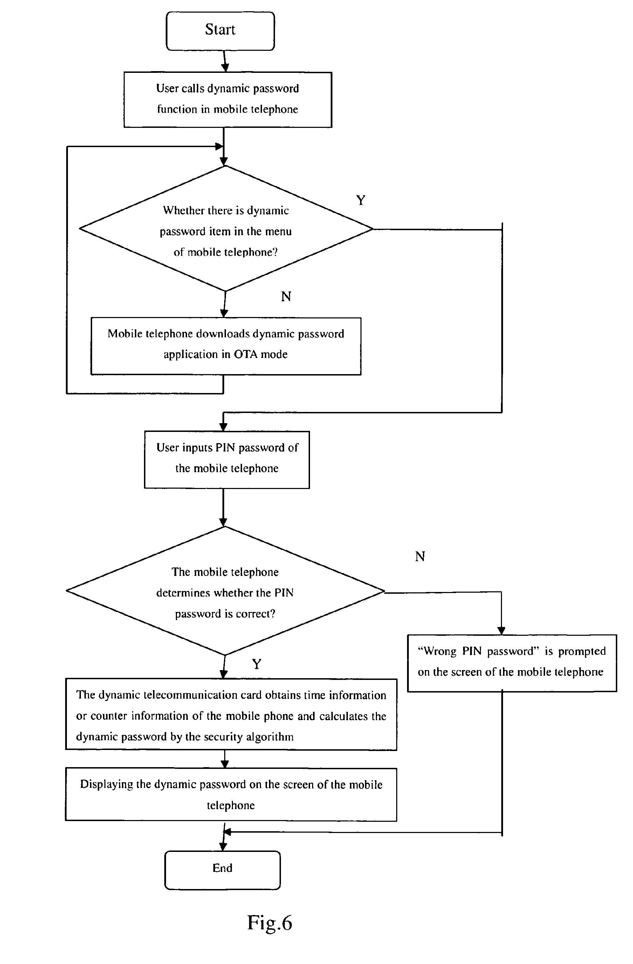

Fig.6 is a flow chart of the mobile telephone generating a dynamic password according to the present invention.

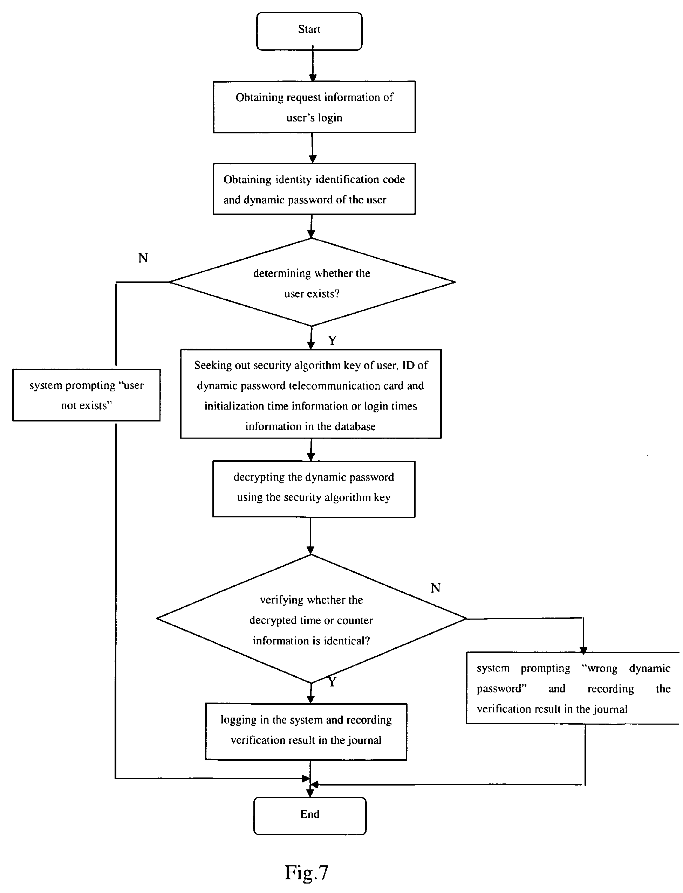

Fig.7 is a flow chart of the dynamic password authentication system authenticating a dynamic password according to the present invention.

As shown in the figures, the specific flow is as follows:
1) A user prepares to login the system
2) The user takes out the mobile telephone and calls the dynamic password service item in the menu.
3) The mobile telephone prompts the user to input the PIN password and verifies the password.
4) After the PIN password is verified, a string of dynamic password is displayed on the LCD of the mobile telephone.
5) The user inputs information such as the dynamic password and the identity identification code in the system through a computer keyboard at subscriber end.
6) All information inputted by the user, including the identity identification code and the dynamic password, are transmitted to the security authentication server.
7) The security authentication server calls the security algorithm key of the user and initialization time parameter of the card or information of the previous login times from the user database according to the user identity identification code.
8) The security authentication server decrypts the dynamic password transmitted from the user using the same security algorithm as the dynamic password telecommunication card and verifies the dynamic password, and then the verification result is recorded in the system journal.
9) The security authentication server returns the verification result to the user and assigns the corresponding authority of the user according to the verification result, and permits the user to login the network information service system according to its authority to get corresponding information services, by which one time of authentication is carried out.

### V. Description of the distribution and management of the key of the dynamic password telecommunication card.

In order to realize the dynamic password authentication system based on the mobile telephone, a security algorithm key is required to be preset in the dynamic password telecommunication card of the mobile telephone. Since the mobile telephone commonly applies a symmetrical encryption algorithm in the current mobile communication, a symmetrical encryption algorithm is also used to perform the computation of the dynamic password in the present invention. In addition, the encryption and decryption key is controlled by the provider of the network information services. That is, if the provider of the network information services is a bank, then the security algorithm key is controlled by the bank; if the provider of the network information services is a government office, then the security algorithm key is controlled by the government office.

The provider of the network information services is in charge of the distribution and management of the key of the dynamic password telecommunication card.

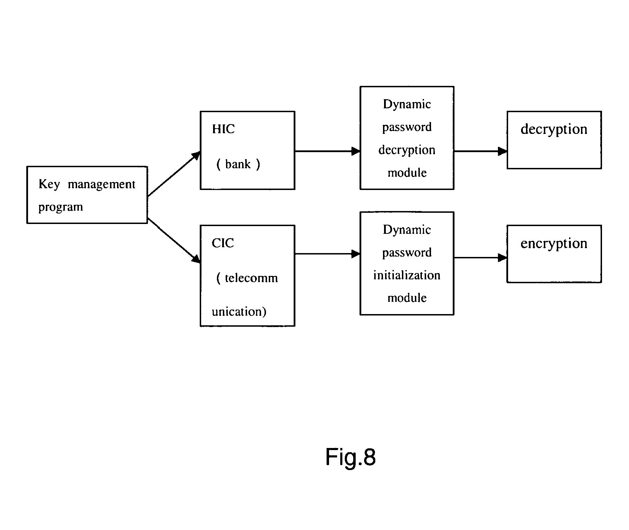

Fig.8 is a flow chart of a password distribution of the dynamic password telecommunication card according to the present invention.

The flow of the password distribution of the dynamic password telecommunication card is as follows:
1. The provider of the network information services generates a CIC (Customer Injection Card) key through a key management system for the communication department to realize the individualization of the dynamic password telecommunication card.
2. The provider of the network information services generates a HIC (Host Injection Card) key and uses this key in the decryption of the dynamic password information.
3. An authorized management center of the provider of the network information services injects the CIC key into the IC card and delivers the card to the communication department to form a master card, and at the same time provides the communication department with a control card of the card.
4. At the time of producing the dynamic password telecommunication card of the mobile telephone, an encryption key is calculated using the CIC key and a unique identification code of the dynamic password telecommunication card and is stored in a specific area of the card, thus one card is ensured to be provided with one password.
5. The communication department provides the unique identification code of the individualized dynamic password telecommunication card to the provider of the network information services in a safe mode, and the dynamic password decryption module of the provider of the network information services uses the HIC key and the unique identification code of the card to calculate the decryption key with the same algorithm. Then the decryption key which is the same as the encryption key is obtained.

HIC card is only used to download the master key into the decryption module. In order to guarantee its security, the HIC card can be used only once. After the downloading, the HIC card will be automatically disabled.

The master key stored in the CIC card is consistent with that in the HIC card.

The technology improves the security of identity authentication effectively and avoids the trouble for the user to remember the password and change the password frequently. The technology is suitable to the systems that require a higher security of the identify authentication, such as the bank, the securities, the police and the electronic government affair and the like, thereby to improve the security for the system administrator and the user to register the system.

Although preferred embodiments of the present invention has been shown and described, it would be appreciated by those skilled in the art that changes may be made in these embodiments without departing from the principals and spirit of the invention, the scope of which is defined in the claims and their equivalents.

## Claims

1. A dynamic password authentication method, **characterized in that** it comprises the steps of:
a mobile terminal performing an encrypting operation using a dynamic password algorithm generating key and an initialization parameter stored in a telecommunication card to obtain an encryption result;
sending the encryption result and a user identity identification code to a security authentication server;
the security authentication server seeking out the dynamic password generating algorithm key in a database based on the user identity identification code and performing a decrypting operation to the encryption result to obtain a decrypted parameter.
comparing the initialization parameter with the decrypted parameter, the mobile terminal passing the authentication if the initialization parameter is consistent with the decrypted parameter, and the authentication being denied if not.

2. The method according to claim 1, **characterized in that** the initialization parameter is time information of the mobile terminal.

3. The method according to claim 2, **characterized in that** if the time information is used as the initialization parameter, a communication delay and a clock error value are added into the decrypted parameter.

4. The method according to claim 1, **characterized in that** the initialization parameter is counting information of the mobile terminal.

5. The method according to claim 4, **characterized in that** if the counting information is used as the initialization parameter, an error value caused by the previous denying of the authentication is added.

6. The method according to claim 1, **characterized in that** the dynamic password generating algorithm key, a user menu or applications which are stored in the mobile terminal and the security authentication server are updated or changed in an Over-the-Air mode.

7. The method according to claim 6, **characterized in that** the Over-the-Air mode comprises the steps of:
a service provider updating new services used with a dynamic password in a database of a download server;
the mobile terminal implementing a momentary query to a dynamic menu download server by a mobile telephone short message, and sending a dynamic menu downloading request to the download server if new services used with the dynamic password are found, the request of the user being upload by network to the short message service center and transmitted to the download server by a gateway;
the download server packaging the dynamic menu requested by the user into a short message with a specified format, and downloading the dynamic password menu required by the user into the dynamic password telecommunication card of the user through a network link in a data short message mode.

8. The method according to claim 7, **characterized in that** the telecommunication card is a SIM card or a UIM card.

9. A dynamic password authentication system, **characterized in that** it comprises:
an authentication server; and a mobile terminal connected to the authentication server via wireless communication,
the mobile terminal is provided with a dynamic password telecommunication card to generate a dynamic password,
the authentication server is stored therein with a dynamic password key corresponding to the dynamic password telecommunication card of the mobile terminal to verify the dynamic password submitted by the mobile terminal

10. The system according to claim 9, **characterized in that** it further comprises a short message service center wirelessly connected to the mobile terminal, and the short message service center provides update service for the user of the mobile terminal or the authentication server
